# EUROPÄISCHE PATENTSCHRIFT

(11) **EP 3 445 605 B1**
(45) Veröffentlichungstag und Bekanntmachung des Hinweises auf die Patenterteilung: **11.03.2020**
(21) Anmeldenummer: 17734658.2
(22) Anmeldetag: 19.06.2017
(51) Int. Cl.: B60L 5/26, B60L 5/19

(54) **KRAFTFAHRZEUG MIT STROMABNEHMER**
MOTOR VEHICLE WITH CURRENT COLLECTOR
VÉHICULE AUTOMOBILE AVEC UN COLLECTEUR D'ÉNERGIE ÉLECTRIQUE

(30) Priorität: 29.06.2016 DE 102016211746
(43) Veröffentlichungstag der Anmeldung: 27.02.2019
(73) Patentinhaber: Siemens Mobility GmbH, 81739 München (DE)
(72) Erfinder: BERDELLE-HILGE, Peter, 78464 Konstanz (DE)
(86) Internationale Anmeldenummer: PCT/EP2017/064905
(87) Internationale Veröffentlichungsnummer: WO 2018/001770

(56) Entgegenhaltungen:
- EP-A1- 0 485 273
- CN-A- 104 901 382
- DE-A1- 3 232 153
- DE-A1- 3 641 084
- DE-A1-102012 213 460
- FR-A- 1 253 122
- US-A- 1 100 731

## Beschreibung

Die Erfindung betrifft ein Kraftfahrzeug gemäß Patentanspruch 1.

Aus der WO 2012/163 763 A2 ist ein nicht schienengebundenes Kraftfahrzeug mit einem Stromabnehmer zur Einspeisung elektrischer Energie aus einer zweipoligen Oberleitung, deren als Hin- und Rückleiter ausgebildete Fahrdrähte jeweils durch mindestens eine Schleifleiste des Stromabnehmers kontaktierbar sind, wobei der Stromabnehmer zwei Tragausleger aufweist, die jeweils am Kraftfahrzeug an einer die Schleifleisten tragenden Wippe derart kipp- und schwenkbar angelenkt sind, dass die Wippe sowohl anheb- als auch absenkbar als auch quer zur Fahrtrichtung bewegbar ist.

Aus der US 1,110,731 A ist ein Traggestänge für eine Minenlokomotive bekannt, das einen Oberarm und einen Unterarm umfasst.

Aus der DE 10 2012 217 720 A1 ein nicht schienengebundenes Fahrzeug, mit einem Stromabnehmer zur Einspeisung elektrischer Energie aus einer zweipoligen Oberleitung, deren als Hin- und Rückleiter ausgebildete Fahrdrähte durch Schleifleisten des Stromabnehmers kontaktierbar sind bekannt, wobei der Stromabnehmer ein Gestänge aufweist, welches fahrdrahtseitig eine die Schleifleisten aufweisende Wippenanordnung trägt und fahrzeugseitig mit einer Stelleinrichtung zur Ausführung einer quer zu einer Fahrzeuglängsachse gerichteten Stellbewegung der Wippenanordnung relativ zum Fahrzeug gekoppelt ist, und dass im Bereich der Wippenanordnung ein Schwingungstilger angeordnet ist, der zur Dämpfung einer in Stellbewegungsrichtung anregbaren Eigenschwingung der Wippenanordnung ausgebildet ist.

Aus den Dokumenten CN 104901382 A, welches die Merkmale des Oberbegriffs des Anspruchs 1 offenbart, FR 1 253 122 A, DE 36 41 084 A1, US 1 100 731 A, DE 10 2012 213 460 A1, DE 32 32 153 A1 und EP 0 485 273 A1 sind Fahrzeuge mit einem Stromabnehmer bekannt.

Es ist Aufgabe der Erfindung, ein verbessertes Kraftfahrzeug bereitzustellen.

Diese Aufgabe wird mittels eines Kraftfahrzeugs gemäß Patentanspruch 1 gelöst. Vorteilhafte Ausführungsformen sind in den abhängigen Ansprüchen angegeben.

Es wurde erkannt, dass ein verbessertes Kraftfahrzeug dadurch bereitgestellt werden kann, dass das Kraftfahrzeug einen Stromabnehmer zur Übertragung elektrischer Energie zwischen Traktionsantrieb des Kraftfahrzeugs und einer ortsfesten elektrischen Fahrleitung, eine Fahrzeugstruktur und eine Fahrzeuglängsachse aufweist, wobei der Stromabnehmer ein Traggestänge aufweist, wobei das Traggestänge wenigstens einen Oberarm und einen Unterarm umfasst, wobei der Unterarm mittels eines ersten Drehgelenks drehbar um eine erste Drehachse mit der Fahrzeugstruktur gekoppelt ist, wobei der Oberarm mittels eines zweiten Drehgelenks drehbar um eine zweite Drehachse mit dem Unterarm gekoppelt ist, wobei die erste Drehachse und/oder die zweite Drehachse parallel zu der Fahrzeuglängsachse des Kraftfahrzeugs ausgerichtet ist.

Diese Ausgestaltung hat den Vorteil, dass eine in Querrichtung quer zur Fahrzeuglängsachse versetzt angeordnete Fahrleitung auf einfache Weise mittels des Stromabnehmers elektrisch kontaktierbar ist. Dadurch wird sichergestellt, dass bei einer Fahrspurabweichung des Kraftfahrzeugs zu der ortsfesten Fahrleitung eine elektrische Verbindung zu der Fahrleitung durch den Stromabnehmer sichergestellt ist. Dadurch kann besonders lange das Kraftfahrzeug durch die durch die Fahrleitung bereitgestellte elektrische Traktionsenergie elektrisch betrieben werden.

Es ist ein zweites Spannmittel vorgesehen, wobei das zweite Spannmittel mit dem Oberarm und mit dem Unterarm gekoppelt ist, wobei das zweite Spannmittel eine zweite Kraft bereitstellt, wobei die zweite Kraft den Oberarm relativ gegenüber dem Unterarm verspannt. Dadurch wird sichergestellt, dass ein zuverlässiger Kontakt der Schleifleiste an der Fahrleitung sichergestellt ist. Insbesondere wird hierbei ein Lichtbogen zwischen der Schleifleiste und der Fahrleitung vermieden.

Das zweite Spannmittel weist eine zweite Antriebseinrichtung auf, wobei die zweite Antriebseinrichtung ausgebildet ist, schaltbar die zweite Kraft bereitzustellen, wobei die zweite Antriebseinrichtung ausgebildet ist, eine Position des Oberarms relativ zum Unterarm zu verändern. Dies hat den Vorteil, dass ein seitlicher Versatz der Fahrleitung relativ zur Fahrzeugstruktur durch eine entsprechende Ansteuerung der ersten Antriebseinrichtung und der zweiten Antriebseinrichtung ausgeglichen werden kann und ein zuverlässiger Berührkontakt zwischen der Schleifleiste und der Fahrleitung sichergestellt ist.

Erfindungsgemäß weist der Stromabnehmer eine Stützeinrichtung auf, wobei die Stützeinrichtung eine Stützstruktur und ein Koppelmittel umfasst. Die Stützstruktur ist mit der Fahrzeugstruktur gekoppelt und zumindest abschnittsweise bogenförmig um die erste Drehachse verlaufend ausgebildet. Das Koppelmittel koppelt den Unterarm mit der Stützstruktur. Auf diese Weise kann der Unterarm besonders leicht ausgebildet werden, da Kräfte über die Stützstruktur aus dem Unterarm abgeleitet werden können.

Die Stützstruktur erstreckt sich in einer Drehebene zur ersten Drehachse. Zusätzlich oder alternativ ist die Stützstruktur oberhalb des ersten Drehgelenks angeordnet.

In einer weiteren Ausführungsform weist der der Stromabnehmer eine Wippenanordnung und wenigstens eine Schleifleiste auf, wobei die Schleifleiste fahrleitungsseitig mit der Wippenanordnung verbunden ist, wobei die Wippenanordnung mittels eines dritten Drehgelenks drehbar um eine dritte Drehachse mit dem Oberarm gekoppelt ist, wobei die dritte Drehachse parallel zur Fahrzeuglängsachse ausgerichtet ist.

Besonders von Vorteil ist hierbei, wenn wenigstens eines der Drehgelenke blockierbar ist und/oder wobei wenigstens eines der Drehgelenke antreibbar ist. Dadurch wird ein ungewolltes Verkippen der Schleifleiste relativ zum Oberarm vermieden.

In einer weiteren Ausführungsform weist der Stromabnehmer ein erstes Spannmittel auf. Das erste Spannmittel ist mit der Fahrzeugstruktur und mit dem Unterarm gekoppelt, wobei das erste Spannmittel eine erste Kraft bereitstellt, wobei vorzugsweise die erste Kraft den Unterarm gegenüber der Fahrzeugstruktur verspannt.

In einer weiteren Ausführungsform weist das erste Spannmittel eine erste Antriebseinrichtung auf, wobei die erste Antriebseinrichtung ausgebildet ist, schaltbar die erste Kraft bereitzustellen, wobei die erste Antriebseinrichtung ausgebildet ist, eine Position des Unterarms relativ zur Fahrzeugstruktur zu verändern. Dadurch kann der Stromabnehmer besonders schnell auf- und abgebügelt werden. Ferner kann eine Ausrichtung des Unterarms zur Fahrzeugstruktur besonders schnell durch die Antriebseinrichtung verändert werden.

In einer weiteren Ausführungsform ist das erste Drehgelenk zu einer Fahrzeugmitte der Fahrzeugstruktur quer zur Fahrzeuglängsachse versetzt angeordnet. Diese Ausgestaltung hat den Vorteil, dass der Stromabnehmer besonders flach in seiner Ruheposition ausgebildet werden kann.

In einer weiteren Ausführungsform umfasst das Koppelmittel wenigstens ein Führungselement. Das Führungselement ist mit dem Unterarm gekoppelt, wobei das Führungselement und die Stützstruktur in Wirkverbindung zueinander stehen und den Unterarm in einer weiteren Drehebene um die erste Drehachse führen. Dadurch kann ein Verkippen oder ein Verdrehen durch Windlasten oder Beschleunigungskräfte, die auf den Unterarm wirken, vermieden werden.

In einer weiteren Ausführungsform weist die Stützstruktur eine erste Verzahnung und das Führungselement eine zweite Verzahnung auf, wobei die zweite Verzahnung kämmend in die erste Verzahnung eingreift, wobei das Führungselement drehbar um eine weitere Drehachse ist, wobei die weitere Drehachse parallel zur Fahrzeuglängsachse angeordnet ist.

In einer weiteren Ausführungsform ist das Führungselement drehmomentschlüssig mit einer Ausgangsseite der ersten Antriebseinrichtung verbunden.

In einer weiteren Ausführungsform weist das Koppelmittel wenigstens ein weiteres Führungselement auf, wobei das weitere Führungselement mit dem Unterarm gekoppelt ist, wobei die Stützstruktur wenigstens eine erste Stützfläche und das weitere Führungselement eine der ersten Stützfläche zugewandte zweite Stützfläche aufweist, wobei die erste Stützfläche und die zweite Stützfläche gegenüberliegend zueinander angeordnet sind, wobei die erste Stützfläche und die zweite Stützfläche jeweils in einer Ebene angeordnet sind, wobei die Ebenen geneigt zu der ersten Drehachse angeordnet sind, wobei die erste Stützfläche und die zweite Stützfläche ausgebildet sind, bei Einleitung einer parallel zur ersten Drehachse wirkenden Kraft in den Unterarm die Kraft durch einen Berührkontakt zwischen der ersten Stützfläche und der zweiten Stützfläche an der Stützstruktur abzustützen. Auf diese Weise wird eine Torsionsbelastung des ersten Drehgelenks um eine Achse quer zur Fahrzeuglängsachse vermieden.

In einer weiteren Ausführungsform weist die Stützstruktur wenigstens eine Aufnahme auf, wobei die Aufnahme die erste Stützfläche aufweist, wobei das weitere Führungselement als Gleitstein ausgebildet ist, wobei das weitere Führungselement in die Aufnahme eingreift.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- FIG 1: eine perspektivische Darstellung eines Systems;
- FIG 2: eine perspektivische Darstellung des in FIG 1 gezeigten Systems;
- FIG 3: eine Rückansicht auf das in den FIGN 1 und 2 gezeigte Kraftfahrzeug mit einem Stromabnehmer gemäß einer ersten Ausführungsform in einer Ruheposition;
- FIG 4: eine Rückansicht auf das in FIG 2 gezeigte Kraftfahrzeug in einer aufgebügelten Position des Stromabnehmers des Fahrzeugs;
- FIG 5: eine Schnittansicht entlang einer in FIG 4 gezeigten Schnittebene A-A durch das in FIG 4 gezeigte Fahrzeug;
- FIG 6: eine Schnittansicht entlang der in FIG 4 gezeigten Schnittebene A-A durch einen Stromabnehmer gemäß einer zweiten Ausführungsform;
- FIG 7: eine Rückansicht auf ein Kraftfahrzeug mit einem Stromabnehmer gemäß einer dritten Ausführungsform;
- FIG 8: eine Rückansicht auf ein Kraftfahrzeug mit einem Stromabnehmer gemäß einer vierten Ausführungsform;
- FIG 9: eine Rückansicht auf ein Kraftfahrzeug mit einem Stromabnehmer gemäß einer fünften Ausführungsform;
- FIG 10: eine Rückansicht auf ein Kraftfahrzeug mit einem Stromabnehmer gemäß einer sechsten Ausführungsform
darstellt.

In den folgenden FIGN wird auf ein Koordinatensystem 5 Bezug genommen. Das Koordinatensystem 5 ist als Rechtssystem ausgebildet und umfasst eine x-Achse, eine y-Achse und eine z-Achse.

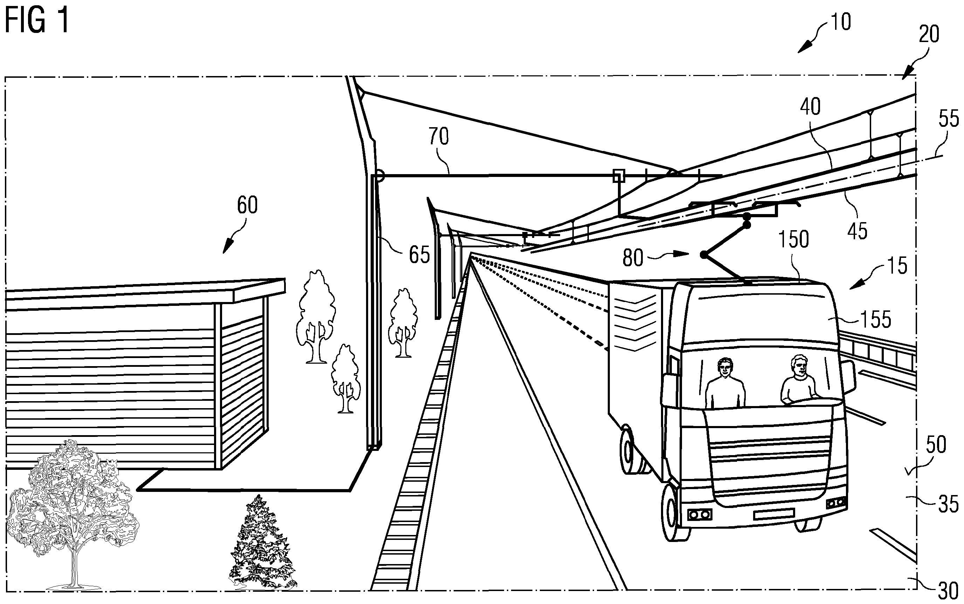

FIG 1 zeigt eine perspektivische Darstellung eines Systems 10.

Das System 10 umfasst ein Kraftfahrzeug 15, eine elektrische Energieversorgung 20 und eine Fahrstraße 25.

Die Fahrstraße 25 weist beispielhaft eine erste Fahrspur 30 und eine parallel zur ersten Fahrspur 30 verlaufende benachbart zur ersten Fahrspur 30 verlaufende zweite Fahrspur 35 auf. Die erste Fahrspur 30 und die zweite Fahrspur 35 werden in die gleich Fahrrichtung befahren.

Die elektrische Energieversorgung 20 weist eine erste ortsfeste erste elektrische Fahrleitung 40 und eine zweite ortsfeste elektrische Fahrleitung 45 auf. Die erste Fahrleitung 40 und die zweite Fahrleitung 45 sind im Wesentlichen parallel verlaufend in einer gemeinsamen Ebene angeordnet, wobei die Ebene im Wesentlichen parallel sich zu einer Oberfläche 50 der Fahrstraße 25 erstreckt. Die Fahrleitung 40, 45 ist als Oberleitung ausgebildet, sodass die Fahrleitung 40, 45 oberhalb des Kraftfahrzeugs 15 angeordnet ist. Beispielhaft ist eine Mittelachse 55 zwischen der ersten Fahrleitung 40 und der zweiten Fahrleitung 45 mittig zur ersten Fahrspur 30 angeordnet. Auch kann die Mittelachse 55 außermittig zur ersten Fahrspur 30 oder auch mittig oder außermittig zur zweiten Fahrspur 35 angeordnet sein. Die Fahrleitung 40, 45 ist elektrisch mit einer zentralen elektrischen Energieversorgung 60 verbunden. Über die zentrale elektrische Energieversorgung 60 wird ein elektrisches Potenzial zwischen der ersten elektrischen Fahrleitung 40 und der zweiten elektrischen Fahrleitung 45 bereitgestellt. Dabei kann beispielsweise die erste Fahrleitung 40 als Hinleiter und die zweite Fahrleitung 45 als Rückleiter ausgebildet sein. Auch ist eine andere Ausgestaltung denkbar. Insbesondere ist kann die erste elektrische Fahrleitung 40 unterhalb in Richtung der Fahrstraße 25 unter der zweiten elektrischen Fahrleitung 45 angeordnet sein.

Um die Position der Fahrleitung 40, 45 oberhalb der Fahrstraße 25 im Wesentlichen festzulegen, sind weitere Infrastruktureinrichtungen, wie Mast 65 und Ausleger 70, vorgesehen. In der Ausführungsform ist nur eine der Fahrspuren 30, 35 durch die Fahrleitung 40, 45 elektrifiziert. Selbstverständlich können auch mehrere Fahrspuren 30, 35 elektrifiziert sein.

Das Kraftfahrzeug 15 ist in der Ausführungsform nicht schienengebunden. Das Kraftfahrzeug 15 kann als Nutzfahrzeug, insbesondere als Lastkraftwagen, ausgebildet. Selbstverständlich kann das Kraftfahrzeug 15 auch andersartig, beispielsweise als Personenkraftwagen oder als Personenbeförderungsfahrzeug, insbesondere als Omnibus, ausgebildet sein.

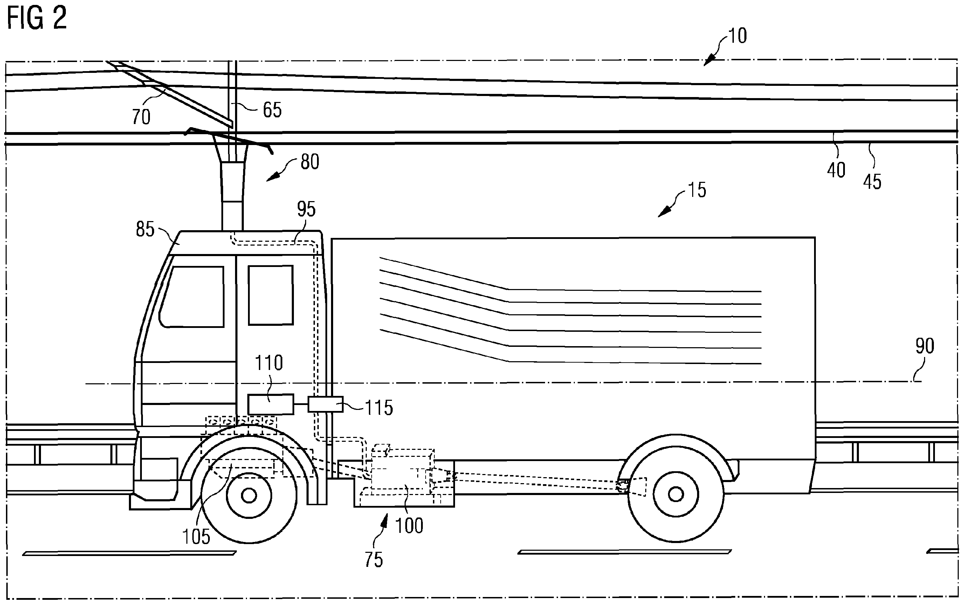

FIG 2 zeigt eine perspektivische Darstellung des in FIG 1 gezeigten Systems 10.

Das Kraftfahrzeug 15 umfasst einen Traktionsantrieb 75, einen Stromabnehmer 80, eine Fahrzeugstruktur 85 und eine Fahrzeuglängsachse 90. Die Fahrzeuglängsachse 90 ist parallel zur x-Achse angeordnet. Das Kraftfahrzeug 15 bewegt sich entlang der Fahrzeuglängsachse 90 auf der Fahrspur 30, 35. Die Fahrzeugstruktur 85 kann als beispielsweise eine Karosserie und/oder Rahmen aufweisen und trägt Komponenten des Kraftfahrzeugs 15, beispielsweise eine Fahrzeugkabine 155 und den Traktionsantrieb 75 zu tragen.

In der Ausführungsform ist der Traktionsantrieb 75 beispielhaft als Hybridantrieb ausgebildet und umfasst beispielhaft eine elektrische Maschine 100, eine Brennkraftmaschine 105, einen elektrischen Energiespeicher 110 und ein Steuergerät 115. Das Steuergerät 115 ist mit dem Traktionsantrieb 75, mit dem Energiespeicher 110 und mit dem Stromabnehmer 80 verbunden. Das Steuergerät 115 steuert in Abhängigkeit eines Betriebszustands die elektrische Maschine 100 und/oder die Brennkraftmaschine 105 derart an, dass das Kraftfahrzeug 15 entlang der Fahrzeuglängsachse 90 bewegt wird.

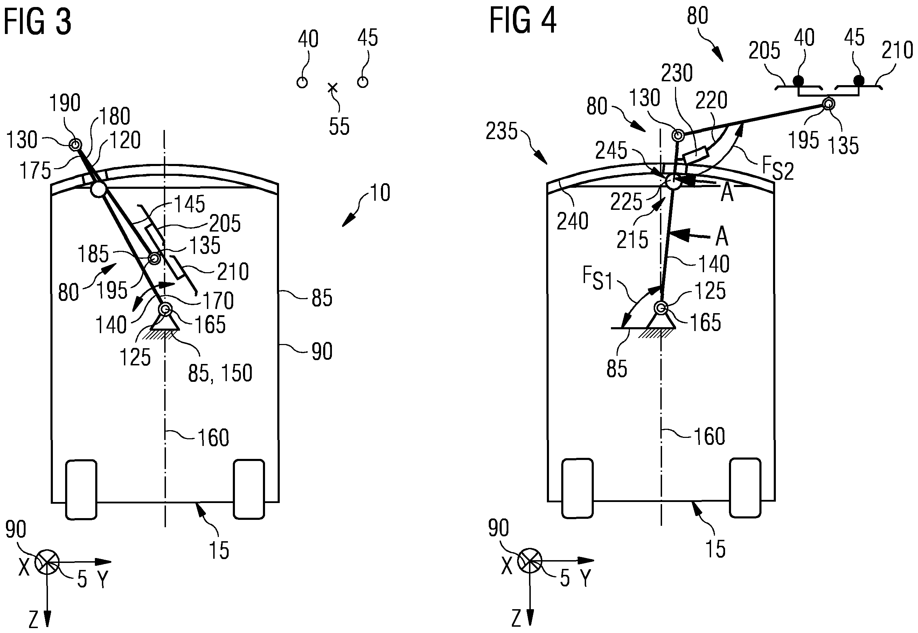

FIG 3 zeigt eine Rückansicht auf das in FIG 1 und FIG 2 gezeigte Kraftfahrzeug 15. Das Kraftfahrzeug 15 wird in einem ersten Betriebszustand betrieben. Im ersten Betriebszustand wird das Kraftfahrzeug 15 herkömmlich über die Brennkraftmaschine 105 und/oder über die elektrische Maschine 100 angetrieben, wobei die elektrische Maschine 100 ihre elektrische Energie aus dem elektrischen Energiespeicher 110 bezieht. Der Stromabnehmer 80 befindet sich im ersten Betriebszustand des Kraftfahrzeugs in einer Ruheposition. Dabei ist der Stromabnehmer 80 abgeklappt und weist keinen Kontakt zu der Fahrleitung 40, 45 auf.

Der Stromabnehmer 80 weist ein Traggestänge 120 auf. Das Traggestänge 120 weist ein erstes Drehgelenk 125, ein zweites Drehgelenk 130 und beispielhaft ein drittes Drehgelenk 135 auf. Ferner umfasst das Traggestänge 120 einen Unterarm 140 und einen Oberarm 145. Das erste Drehgelenk 125 ist mit der Fahrzeugstruktur 85, insbesondere mit einem Kabinendach 150 der Fahrzeugkabine 90, des Kraftfahrzeugs 15 verbunden. Das erste Drehgelenk 125 kann mittig zu einer maximalen Quererstreckung (y-Richtung) des Kraftfahrzeugs 15 angeordnet sein. Auch kann das erste Drehgelenk 125 außermittig zu einer Fahrzeugmitte 160 des Kraftfahrzeugs 15 angeordnet sein. Das erste Drehgelenk 125 ist drehbar um eine erste Drehachse 165. Die erste Drehachse 165 ist dabei parallel verlaufend zur Fahrzeuglängsachse 90 angeordnet.

Mit einem ersten Ende 170 ist der Unterarm 140 mit dem ersten Drehgelenk 125 drehbar um die erste Drehachse 165 verbunden. Mit einem zweiten Ende 175 ist der Unterarm 140 mit dem zweiten Drehgelenk 130 verbunden. Ein erstes Ende 180 des Oberarms 145 ist mit dem zweiten Drehgelenk 130 verbunden. Der Oberarm 145 ist an einem ersten Ende 180 mittels des zweiten Drehgelenks 130 drehbar um die zweite Drehachse 190 mit dem Unterarm 140 gekoppelt. Ein zweites Ende 185 des Oberarms 145 ist mit dem dritten Drehgelenk 135 verbunden.

Das zweite Drehgelenk 130 ist drehbar um eine zweite Drehachse 190. Die zweite Drehachse 190 ist parallel zur ersten Drehachse 165 und zur Fahrzeuglängsachse 90. Das dritte Drehgelenk 135 ist drehbar um eine dritte Drehachse 195. Die dritte Drehachse 195 ist parallel zur ersten und zweiten Drehachse 165 und 190 und ebenso zur Fahrzeuglängsachse 90. Jedes der Drehgelenke 125, 130, 135 weist dabei ausschließlich einen Freiheitsgrad auf.

Der Stromabnehmer 80 umfasst ferner eine Wippenanordnung 200, eine erste Schleifleiste 205 und beispielhaft eine zweite Schleifleiste 210. Die erste Schleifleiste 205 ist der ersten elektrischen Fahrleitung 40 zugeordnet. Die zweite Schleifleiste 210 ist der zweiten Fahrleitung 45 zugeordnet. Die erste und zweite Schleifleiste 205, 210 sind fahrleitungsseitig mit der Wippenanordnung 200 verbunden. Die Wippenanordnung 200 ist über das dritte Drehgelenk 135 drehbar um die dritte Drehachse 195 mit dem Oberarm 145 gekoppelt.

In einer Ruheposition ist der Stromabnehmer 80 abgebügelt und die Schleifleiste 205, 210 ist von der Fahrleitung 40, 45 getrennt. Besonders von Vorteil ist hierbei, wenn in der Ruheposition die Schleifleiste 205, 210 unterhalb des zweiten Drehgelenks 130 angeordnet ist. Diese Ausgestaltung hat den Vorteil, dass der Stromabnehmer 80 eine besonders niedrige Bauhöhe und eine besonders niedrige Erstreckung in z-Richtung benötigt.

In der Ausführungsform sind alle Drehachsen 165, 190, 195 parallel zur Fahrzeuglängsachse 90 ausgerichtet. Selbstverständlich kann auch eine der Drehachsen 165, 190, 195 schräg zur Fahrzeuglängsachse 90, insbesondere die zweite Drehachse 190 und/oder die dritte Drehachse 195 geneigt zur Fahrzeuglängsachse 90 angeordnet sein.

FIG 4 zeigt eine Rückansicht auf das in FIG 3 gezeigte Kraftfahrzeug 15 in einer Arbeitsposition des Stromabnehmers 80.

In der Arbeitsposition ist die erste Schleifleiste 205 an der ersten elektrischen Fahrleitung 40 angebügelt, d.h. liegt die erste Schleifleiste 205 an der ersten elektrischen Fahrleitung 40 an. Ferner liegt die zweite Schleifleiste 210 an der zweiten elektrischen Fahrleitung 45 an.

Das dritte Drehgelenk 135 und die Wippenanordnung 200 sind oberhalb des zweiten Drehgelenks 130 angeordnet. Durch die parallele Ausrichtung der Drehachsen 165, 190, 195 zur Fahrzeuglängsachse 90 kann die Fahrleitung 40, 45 außermittig zur Fahrzeugmitte 160 angeordnet sein, sodass auch bei einem Fahrspurwechsel zwischen der ersten Fahrspur 30 und der zweiten Fahrspur 35 die Schleifleiste 205, 210 an der jeweils zugeordneten Fahrleitung 40, 45 anliegen kann. Dabei stellt der Stromabnehmer 80 sicher, dass der Traktionsantrieb 75 elektrisch mit der Fahrleitung 40, 45 verbunden ist und der Traktionsantrieb 75 in einen elektrischen Betriebszustand geschaltet werden kann. Auf diese Weise kann auf kann die elektrische Maschine 100 besonders lange mit elektrischer Energie aus der Fahrleitung 40, 45 angetrieben werden kann und/oder gleichzeitig der elektrische Energiespeicher 110 des Kraftfahrzeugs 15 geladen werden.

Zusätzlich weist die in den FIGN 3 und 4 gezeigte Ausgestaltung des Stromabnehmers 80 ein erstes Spannmittel 215 und/ oder ein zweites Spannmittel 220 auf. Das erste Spannmittel 215 ist an einer Seite mit der Fahrzeugstruktur 85 und an einer anderen Seite mit dem Unterarm 140 gekoppelt. Das erste Spannmittel 215 stellt eine erste Kraft F_{S1} bereit. Die erste Kraft F_{S1} kann sowohl eine Druckkraft oder eine Zugkraft sein. Auch kann die erste Kraft F_{S1} eine Resultierende aus einem um die erste Drehachse 165 wirkenden Drehmoment sein.

Mittels der ersten Kraft F_{S1} wird vorzugsweise der Unterarm 140 gegenüber der Fahrzeugstruktur 85 verspannt. Dabei ist von besonderem Vorteil, wenn die erste Kraft F_{S1} eine Drucckraft ist, die den Unterarm 140 aus der Ruheposition (vgl. FIG 3) nach oben hin drückt und dabei den Unterarm 140 um die erste Drehachse 165 verschwenken kann.

Das erste Spannmittel 215 kann beispielsweise ein erstes Federelement umfassen. Zusätzlich oder alternativ kann das erste Spannmittel 215 auch eine erste Antriebseinrichtung 225 umfassen. Zusätzlich zu dem ersten Federelement und/oder zu der ersten Antriebseinrichtung 225 kann das erste Spannmittel 215 eine Hebelvorrichtung aufweisen, um die erste Kraft F_{S1} zwischen der Fahrzeugstruktur 85 und dem Unterarm 140 zu übertragen. Die erste Antriebseinrichtung 225 ist dabei ausgebildet, schaltbar die erste Kraft F_{S1} bereitzustellen und eine Position des Unterarms 140 relativ zur Fahrzeugstruktur 85 zu verändern.

Das zweite Spannmittel 220 ist an einer Seite mit dem Unterarm 140 und an einer anderen Seite mit dem Oberarm 145 gekoppelt. Das zweite Spannmittel 220 stellt eine zweite Kraft F_{S2} bereit, wobei vorzugsweise die zweite Kraft F_{S2} den Oberarm 145 gegenüber dem Unterarm 140 derart verspannt, dass der Oberarm 145 nach oben hin in Richtung der Fahrleitung 40, 45 gedrückt wird.

Die zweite Kraft F_{S2} kann sowohl eine Druckkraft oder eine Zugkraft sein. Auch kann die zweite Kraft F_{S1} eine Resultierende aus einem um die zweite Drehachse 190 wirkenden weiteren Drehmoment sein. Dabei kann das zweite Spannmittel 220 ein zweites Federelement und/oder eine zweite Antriebseinrichtung 230 umfassen. Die zweite Antriebseinrichtung 230 kann dabei schaltbar die zweite Kraft F_{S2} bereitstellen. Die zweite Antriebseinrichtung 230 ist dabei ausgebildet, eine Position des Oberarms 145 relativ zum Unterarm 140 zu verändern.

Durch das Vorsehen der Antriebseinrichtung 225, 230 kann auf einfache Weise die Schleifleiste 205, 210 von der Ruheposition an die Fahrleitung 40, 45 manövriert werden. Ferner ist von besonderem Vorteil, wenn das Spannmittel 215, 220 auch im angebügelten Zustand des Stromabnehmers 80 vorgespannt ist, so dass sichergestellt ist, dass während der Fahrt des Kraftfahrzeugs 15 entlang der Fahrleitung 40, 45 ein im Wesentlichen kontinuierlicher Berührkontakt zwischen der ersten Schleifleiste 205 und der ersten Fahrleitung 40 und zwischen der zweiten Schleifleiste 210 und der zweiten Fahrleitung 45 besteht. Dadurch kann ein Lichtbogen zwischen Schleifleiste 205, 210 und der jeweils zugeordneten Fahrleitung 40, 45 vermieden werden.

In der Ausführungsform weist beispielhaft zusätzlich der Stromabnehmer 80 eine Stützeinrichtung 235 auf. Die Stützeinrichtung 235 weist eine Stützstruktur 240 und ein Koppelmittel 245 auf. Die Stützstruktur 240 ist mit der Fahrzeugstruktur 85 verbunden und erstreckt sich in einer Drehebene zur ersten Drehachse 165. Die Stützstruktur 240 verläuft dabei bogenförmig um die erste Drehachse 165. Die Stützstruktur 240 erstreckt sich in der Ausführungsform beispielhaft über die gesamte Fahrzeugbreite der Fahrzeugstruktur 85 und ist oberhalb des ersten Drehgelenks 125 und unterhalb des zweiten Drehgelenks 130 angeordnet. Auch kann die Stützstruktur 240 sich nur über einen Teilbereich der Fahrzeugbreite der Fahrzeugstruktur 85 erstrecken. Auch kann die Stützstruktur 240 abschnittsweise einen anderen Verlauf als ein Kreisbogen um die erste Drehachse 165 folgend ausgebildet sein.

Das Koppelmittel 245 koppelt die Stützstruktur 240 mit dem Unterarm 140. Diese Ausgestaltung hat den Vorteil, dass der Unterarm 140 besonders leicht ausgebildet werden kann, da über die Stützstruktur 240 Kräfte in Fahrzeuglängsrichtung am Unterarm 140 abgestützt werden können.

Die Stützeinrichtung 235 dient dazu, Torsionskräfte um die y-Achse resultierend aus Windlasten auf den Stromabnehmer 80 durch die Bewegung des Kraftfahrzeugs 15 sowie Beschleunigungskräfte in Längsrichtung auf den Stromabnehmer 80 sowie Reibkräfte durch das Entlangreiben der Schleifleiste 205, 210 an der Fahrleitung 40, 45 abzustützen und im Wesentlichen das erste Drehgelenk 125 von einer Torsionsbelastung um die y-Achse freizustellen.

Durch die Ausgestaltung des Stromabnehmers 80 als ebenes Gelenkgetriebe, insbesondere als offene kinematische Kette, kann der Stromabnehmer 80 mit drei Freiheitsgraden insgesamt ausgeführt werden und sowohl in der Arbeitsposition (FIG 4) und als auch in der Ruheposition (FIG 3) einen besonders niedrigen Bauraum und eine geringe Windanfälligkeit aufweisen. Auch kann die Anordnung des ersten Drehgelenks 125 außerhalb der Fahrzeugmitte 160 erfolgen, um so mit einem durch eine Gewichtskraft des Unterarms 140 entstehenden Moment das durch den Knickarm in die Stützstruktur 240 eingeleitete Moment zumindest teilweise zu kompensieren.

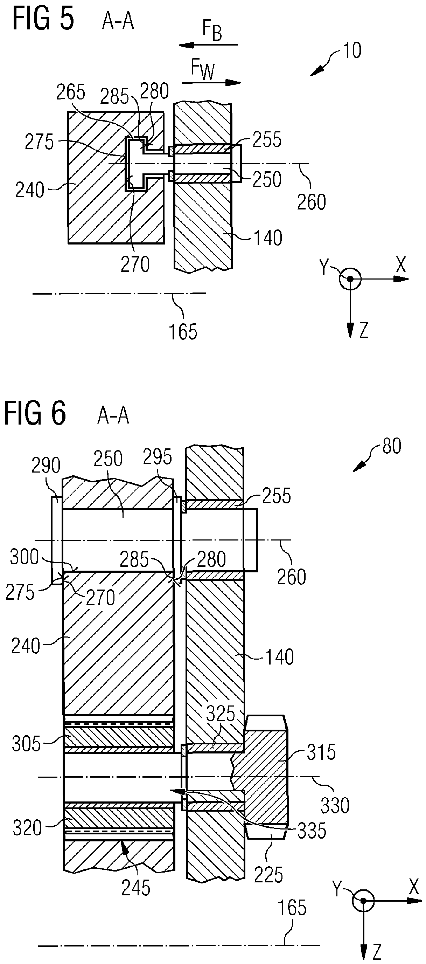

FIG 5 zeigt eine Schnittansicht entlang einer in FIG 4 gezeigten Schnittebene A-A durch das in FIG 1 gezeigte System 10.

Das Koppelmittel 245 weist ein Führungselement 250 auf, das in der Ausführungsform als Gleitstein ausgebildet ist. Das Führungselement 250 ist mittels eines vierten Drehgelenks 255 drehbar um eine vierte Drehachse 260 am Unterarm 140 gelagert. Das vierte Drehgelenk 255 weist ausschließlich einen Freiheitsgrad auf. Das vierte Drehgelenk 255 kann beispielsweise als Gleitlager ausgebildet sein. Das vierte Drehgelenk 255 legt ferner das Führungselement 250 in axialer Richtung bezogen auf die vierte Drehachse 260 fest.

Die Stützstruktur 240 weist beispielhaft eine Aufnahme 265 auf. Die Aufnahme 265 weist eine erste Stützfläche 270 auf. Die erste Stützfläche 270 ist als Aufnahmegrund der Aufnahme 265 ausgebildet. Gegenüberliegend zur ersten Stützfläche 270 weist stirnseitig das Führungselement 250 eine zweite Stützfläche 275 auf. Ferner kann zusätzlich das Führungselement 250 eine dritte Stützfläche 280 und die Aufnahme 265 eine der dritten Stützfläche 280 zugewandte vierte Stützfläche 285 aufweisen. Die zweite und dritte Stützfläche 275, 280 sind zwei in axialer Richtung bezogen auf die erste Drehachse 165 versetzt angeordnete Seiten des Führungselements 250 angeordnet. Die vierte Stützfläche 285 ist beispielhaft versetzt in Längsrichtung zu der ersten Stützfläche 270 angeordnet. In der Ausführungsform ist die Stützfläche 270, 275, 280, 285 senkrecht zur ersten Drehachse 165 angeordnet. Auch kann die Stützfläche 270, 275, 280, 285 andersartig geneigt zu der ersten Drehachse 165 ausgerichtet sein. Dabei ist die erste Stützfläche 270 und die zweite Stützfläche 275 vorteilhafterweise korrespondierend zueinander in zumindest parallel angeordneten Ebenen angeordnet. Ebenso ist die dritte und vierte Stützfläche 280, 285 in parallel zueinander angeordneten Ebenen angeordnet. Fährt das Kraftfahrzeug 15, so greift an dem Stromabnehmer 80 eine Windkraft F_{W} an. Die Windkraft F_{W} wirkt dabei parallel zur ersten Drehachse 165. Die Windkraft Fw wird über den Unterarm 140 und das vierte Gelenk 255 in das Führungselement 250 eingeleitet. Das Führungselement 250 stützt sich dabei beispielhaft über die dritte Stützfläche 280 und die vierte Stützfläche 285 an der Stützstruktur 240 ab, sodass das eine Belastung des ersten Drehgelenks 125 auf Torsion um die y-Achse quer zur Fahrzeuglängsachse 90 vermieden wird.

Beim Abbremsen wird beispielsweise eine Bremskraft F_{B} von dem Unterarm 140 über das vierte Drehgelenk 255 in das Führungselement 250 eingeleitet. Die Bremskraft F_{B} wirkt dabei parallel zur ersten Drehachse 165.

Durch ein Anliegen der ersten und zweiten Stützfläche 270, 275 aneinander wird die auf den Stromabnehmer 80 wirkende Bremskraft F_{B} an die Stützstruktur 240 übertragen.

Anstatt der in FIG 5 beschriebenen Ausgestaltung des Führungselements 250 als Gleitstein ist auch denkbar, dass das Führungselement 250 andersartig ausgebildet ist.

FIG 6 zeigt eine Schnittansicht durch eine Weiterbildung des in den FIGN 1 bis 5 gezeigten Stromabnehmers 80 entlang der in FIG 4 gezeigten Schnittebene A-A.

Der Stromabnehmer 80 ist ähnlich zu dem in den FIGN 1 bis 5 gezeigten Stromabnehmer 80 ausgebildet. Abweichend dazu ist das Führungselement 250 als Rolle ausgebildet, wobei das Führungselement 250 einen ersten Absatz 290 und einen axial versetzt zum ersten Absatz 290 angeordneten zweiten Absatz 295 aufweist. An dem ersten Absatz 290 ist auf einer zum zweiten Absatz 295 zugewandten Seite die erste Stützfläche 270 angeordnet. Stirnseitig auf einer zum Unterarm 140 abgewandten Stirnseite der Stützstruktur 240 ist die zweite Stützfläche 275 an der Stützstruktur 240 angeordnet.

Am zweiten Absatz 295 auf einer zum ersten Absatz 190 zugewandten Seite die vierte Stützfläche 285 angeordnet. Die dritte Stützfläche 280 ist stirnseitig auf einer zum Unterarm 140 zugewandten Seite der an der Stützstruktur 240 angeordnet. Das Führungselement 250 ist beispielhaft radial außenseitig bezogen auf die erste Drehachse 165 zur Stützstruktur 240 angeordnet. Das Führungselement 250 agiert dabei als Laufrolle, die entlang einer äußeren Umfangsfläche 300 der Stützstruktur 240 entlang abrollt.

Radial innenseitig weist beispielhaft die Stützstruktur 240 eine erste Verzahnung 305 auf. Die erste Verzahnung 305 ist als Innenverzahnung ausgebildet. Ferner weist das Koppelmittel 245 ein als zusätzliches Führungselement ausgebildetes Zahnrad 315 auf. Das Zahnrad 315 weist eine umfangsseitig angeordnete zweite Verzahnung 320 auf, die als Außenverzahnung ausgebildet ist. Die zweite Verzahnung 320 greift kämmend in die erste Verzahnung 305 ein. Das Zahnrad 315 ist mittels eines Lagers 325 drehbar um eine fünfte Drehachse 330 mit dem Unterarm 140 gekoppelt.

Ferner kann an dem Unterarm 140 zusätzlich die erste Antriebseinrichtung 225 angeordnet sein, wobei eine Ausgangsseite 335 der ersten Antriebseinrichtung 225 mit dem Zahnrad 315 gekoppelt ist. Dabei ist von Vorteil wenn die erste Antriebseinrichtung 225 eine weitere elektrische Maschine aufweist. Die erste Antriebseinrichtung 225 treibt dabei Zahnrad 315 an, sodass der Unterarm 140 in einer weiteren Drehebene, die versetzt zu der Drehebene, in der sich die Stützstruktur 240 erstreckt, um die erste Drehachse 165 geführt wird. Dadurch kann die erste Antriebseinrichtung 225 durch den großen Abstand zwischen der ersten Antriebseinrichtung 225 und der ersten Drehachse 165 ein hohes Moment um die erste Drehachse 165 bereitstellen, sodass die erste Antriebseinrichtung 225 besonders kompakt ausgebildet sein kann.

Alternativ zu der in FIG 6 gezeigten Ausgestaltung ist auch denkbar, dass anstatt des Zahnrads ein weiteres Führungselement 250 vorgesehen ist, das innenseitig an einer inneren Umfangsfläche der Stützstruktur 240 abrollt. Auch ist denkbar, dass auf das Führungselement 250 verzichtet wird und ausschließlich das Zahnrad 315 und die Stützstruktur 240 vorgesehen sind.

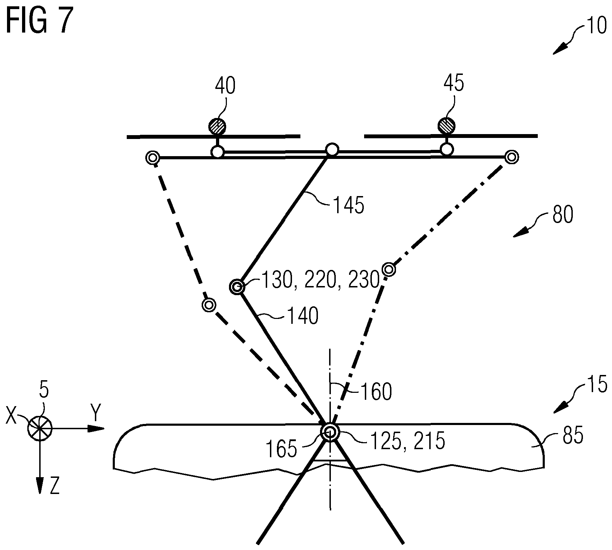

FIG 7 zeigt eine Rückansicht auf das System 10 mit einem Stromabnehmer 80 gemäß einer zweiten Ausführungsform. Der Stromabnehmer 80 ist ähnlich zu dem in den FIGN 1 bis 6 gezeigten Stromabnehmer 80 ausgebildet. Abweichend dazu wird in FIG 7 auf die Stützstruktur 240 und das Führungselement 250 verzichtet.

Ferner ist das erste Spannmittel 215 und das erste Drehgelenk 125 integriert ausgebildet, sodass beispielsweise in dem ersten Drehgelenk 125 ebenso die erste Antriebseinrichtung 225 angeordnet ist, um den Unterarm 140 relativ zur Fahrzeugstruktur 85 um die erste Drehachse 165 zu verdrehen.

Ebenso ist in der Ausführungsform beispielhaft das zweite Drehgelenk 130 und das zweite Spannmittel 220 integriert ausgebildet, sodass ebenso im zweiten Drehgelenk 130 und die zweite Antriebseinrichtung 230 angeordnet ist, um den Oberarm 145 relativ zu dem Unterarm 140 zu verstellen.

Die erste Antriebseinrichtung 225 und die zweite Antriebseinrichtung 230 sind in der Ausführungsform mit einem weiteren Steuergerät (nicht dargestellt) verbunden, wobei in Abhängigkeit der Position der Fahrleitung 40, 45 relativ zur Fahrzeugstruktur 85 die Antriebseinrichtung 225, 230 angesteuert wird, sodass unabhängig von der Anordnung der Fahrzeugstruktur 85 relativ zur Fahrleitung 40, 45 die jeweilige Schleifleiste 205, 210 an der ihr zugeordneten Fahrleitung 40, 45 anliegt, sodass der Stromabnehmer 80 eine elektrische Verbindung zwischen der Fahrleitung 40, 45 und dem Steuergerät 115 bereitstellen kann. Dabei kann, wie in FIG 7 mittels einer strichlierten oder einer strichpunktierten Linie dargestellt, der Unterarm 140 und der Oberarm 145 derart verschwenkt werden, sodass die Fahrleitung 40, 45 entweder mittig zu der Fahrzeugmitte 160 oder seitlich versetzt, beispielsweise bei der strichlierten Anordnung seitlich nach links in FIG 7 versetzt und bei der strichpunktierten Darstellung des Stromabnehmers 80 seitlich nach rechts versetzt zu der Fahrzeugmitte 160 angeordnet sein kann. Dadurch wird eine zuverlässige elektrische Verbindung des Kraftfahrzeugs 15 zu der Fahrleitung 40, 45 auch bei einem Fahrspurwechsel, Ausweichmanövern oder einem versetzten Fahren zu der Fahrspur 30, 35, beispielsweise bei Baustellen, bereitgestellt werden. Ebenso ist auch denkbar, dass die elektrische Verbindung zu der Fahrleitung 40, 45 auch bei Fahren auf der zweiten Fahrspur 35 sichergestellt wird.

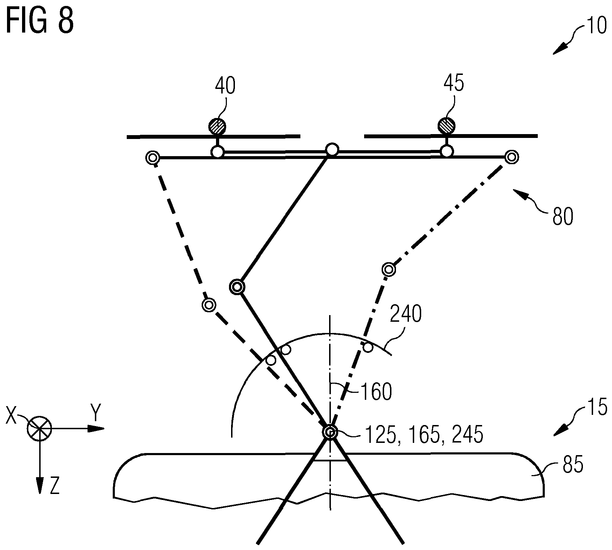

FIG 8 zeigt eine Rückansicht auf das Kraftfahrzeug 15 des Systems 10 im Stromabnehmer 80 gemäß einer dritten Ausführungsform. Der Stromabnehmer 80 ist ähnlich zu dem in den FIGN 1 bis 6 gezeigten Stromabnehmer 80 ausgebildet. Abweichend dazu ist die Stützstruktur 240 asymmetrisch zur Fahrzeugmitte 160 ausgebildet.

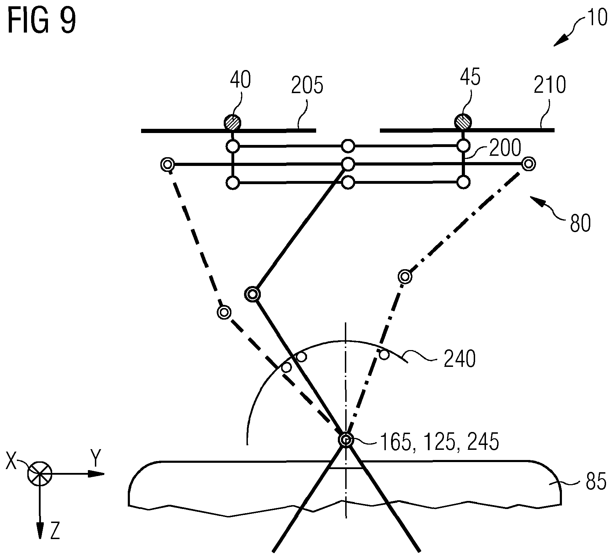

FIG 9 zeigt eine Rückansicht auf das Kraftfahrzeug 15 des Systems 10 mit einem Stromabnehmer 80 gemäß einer vierten Ausführungsform. Der Stromabnehmer 80 ist ähnlich zu dem in FIG 8 gezeigten Stromabnehmer 80 ausgebildet. Abweichend dazu ist die Wippenanordnung 200 als Viergelenk ausgebildet und dient dazu, ein zuverlässiges Anliegen der ersten Schleifleiste 205 an der ersten Fahrleitung 40 und der zweiten Schleifleiste 210 an der zweiten Fahrleitung 45 sicherzustellen.

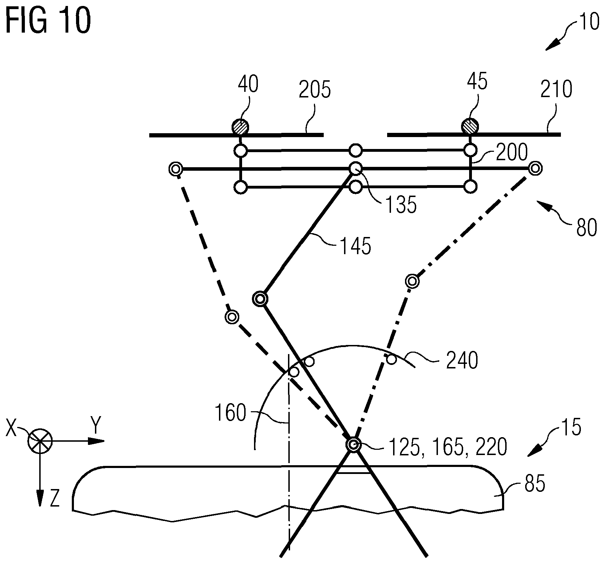

FIG 10 zeigt eine Rückansicht auf das Kraftfahrzeug 15 des Systems 10 mit einem Stromabnehmer 80 gemäß einer fünften Ausführungsform. Der Stromabnehmer 80 ist ähnlich zu den in den FIG 8 und 9 gezeigten Stromabnehmer 80 ausgebildet. Abweichend dazu ist das erste Drehgelenk 125 in Querrichtung versetzt zur Fahrzeugmitte 160 der Fahrspur quer zur Fahrzeuglängsachse 90 angeordnet. Auf diese Weise kann besonders viel Stauraum bereitgestellt werden, um in der Ruheposition einen besonders flachen Stromabnehmer 80 sicherzustellen.

Von besonderem Vorteil ist hierbei, wenn wenigstens eines der Drehgelenke 125, 130, 135, vorzugsweise alle Drehgelenke 125, 130, 135, in abgebügeltem Zustand der Schleifleiste 205, 210 blockiert ist und im angebügelten Zustand unblockiert ist. Besonders von Vorteil ist, wenn im angebügelten Zustand der Schleifleiste 205, 210 das dritte Drehgelenk 135 blockiert ist und das erste Drehgelenk 125 sowie das zweite Drehgelenk 130 unblockiert sind. Dadurch kann im angebügelten Zustand die Wippenanordnung 200 ein zuverlässiges Anliegen der Schleifleiste 205, 210 an der Fahrleitung 40, 45 gewährleisten. Insbesondere kann die Wippenanordnung 200 einen Höhenversatz (z-Richtung) der Fahrleitungen 40, 45 zueinander ausgleichen. Im abgebügelten Zustand sichert das blockierte Drehgelenk 125, 130, 135 ein Verkippen, insbesondere ein Verdrehen der Wippenanordnung 200, relativ zum Oberarm 145 und ein mögliches Anschlagen einer der Schleifleisten 205, 210 an der Fahrleitung 40, 45 oder an Infrastruktureinrichtungen, insbesondere am Mast 65 oder Ausleger 70.

Die oben beschriebenen Ausgestaltungen des Systems 10 haben den Vorteil, dass durch den Stromabnehmer 80 ein seitlicher Versatz (y-Richtung) und/oder ein vertikaler Versatz (z-Richtung) der Fahrleitung 40, 45 zu der Fahrzeugstruktur 85 ausgeglichen werden kann, und gleichzeitig ein besonders kompakter Stromabnehmer 80, insbesondere in eingeklapptem Zustand, bereitgestellt werden kann. Insbesondere wird auch sichergestellt, dass der Stromabnehmer 80 auch bei seitlich versetzter Fahrleitung 40, 45 zu der Fahrzeugstruktur 85 angebügelt oder abgebügelt werden kann. Dadurch kann ein besonders langer elektrischer Kontakt des Kraftfahrzeugs 15 über den Stromabnehmer 80 mit der Fahrleitung 40, 45 sichergestellt werden.

Ferner bietet die oben beschriebene Ausgestaltung des Stromabnehmers 80 eine besonders niedrige Bauteilanzahl. Insbesondere kann die Anzahl von Antriebseinrichtungen 225, 230 auf insgesamt zwei Antriebseinrichtungen 225, 230 reduziert werden, sodass die Ansteuerung des Stromabnehmers 80 besonders einfach ist. Auch wird durch die Verspannung, die sowohl mechanisch, beispielsweise mittels Federelement, als auch mittels der Antriebseinrichtung 225, 230 erfolgen kann, ein unmittelbares Folgen der Fahrzeugbewegung und der sichere Kontakt der Schleifleiste 205, 210 an der Fahrleitung 40, 45 sichergestellt.

Insbesondere wird durch das Vorsehen der Antriebseinrichtung 225, 230 ein schnelles Anbügeln und Abbügeln des Stromabnehmers 80 an der Fahrleitung 40, 45 sichergestellt. In der Ausführungsform können besonders günstig der Unterarm 140 und der Oberarm 145 in sequenziell in Fahrtrichtung parallel versetzt zueinander angeordneten Drehebenen angeordnet werden, das die Ausführung und Ausgestaltung der Drehgelenke 125, 130, 135 besonders vereinfacht und eine Position des Unterarms 140 zum Oberarm 145 durch die parallele Anordnung der Lenker ermöglicht. Dadurch ist der Stromabnehmer 80 besonders einfach herstellbar.

Durch die Reduktion der Antriebseinrichtungen 225, 230 auf eine Beschränkung von zwei Antriebseinrichtungen 225, 230 ist die Ausgestaltung des Stromabnehmers 80 besonders einfach. Ferner wird ein Höhenausgleich zwischen den Fahrleitungen 40, 45 und eine individuelle Konstanthaltung einer Anpresskraft der Schleifleiste 205, 210 an die Fahrleitung 40, 45 sichergestellt.

## Patentansprüche

1. Kraftfahrzeug (15), insbesondere ein Nutzfahrzeug oder ein Bus,
- aufweisend einen Stromabnehmer (80), zur Übertragung elektrischer Energie zwischen einem Traktionsantrieb (75) des Kraftfahrzeugs (15) und einer ortsfesten elektrischen Fahrleitung (40, 45), eine Fahrzeugstruktur (85) und eine Fahrzeuglängsachse (90), entlang welcher das Kraftfahrzeug (15) eingerichtet ist, bewegt zu werden,
- wobei der Stromabnehmer (80) ein Traggestänge (120) aufweist,
- wobei das Traggestänge (120) wenigstens einen Oberarm (145) und einen Unterarm (140) umfasst,
- wobei der Unterarm (140) mittels eines ersten Drehgelenks (125) drehbar um eine erste Drehachse (165) mit der Fahrzeugstruktur (85) gekoppelt ist,
- wobei der Oberarm (145) mittels eines zweiten Drehgelenks (130) drehbar um eine zweite Drehachse (190) mit dem Unterarm (140) gekoppelt ist,
- wobei die erste Drehachse (165) und/oder die zweite Drehachse (190) parallel zu der Fahrzeuglängsachse (90) des Kraftfahrzeugs (15) ausgerichtet sind,
- wobei ein zweites Spannmittel (220) vorgesehen ist, wobei das zweite Spannmittel (220) mit dem Oberarm (145) und mit dem Unterarm (140) gekoppelt ist,
- wobei das zweite Spannmittel (220) eine zweite Kraft (FS2) bereitstellt,
- wobei die zweite Kraft (FS2) den Oberarm (145) gegenüber dem Unterarm (140) verspannt,
- wobei das zweite Spannmittel (220) eine zweite Antriebseinrichtung (230) umfasst,
- wobei die zweite Antriebseinrichtung (230) ausgebildet ist, schaltbar die zweite Kraft (FS2) bereitzustellen,
- wobei die zweite Antriebseinrichtung (230) ausgebildet ist, eine Position des Oberarms (145) relativ zum Unterarm (140) zu verändern,
- wobei der Stromabnehmer (80) eine Stützeinrichtung (235) umfasst,
- wobei die Stützeinrichtung (235) eine Stützstruktur (240) und ein Koppelmittel (245) umfasst,
**dadurch gekennzeichnet, dass**
- die Stützstruktur (240) mit der Fahrzeugstruktur (85) verbunden ist und zumindest abschnittsweise bogenförmig um die erste Drehachse (165) verlaufend ausgebildet ist,
- die Stützstruktur (240) in einer Drehebene zu der ersten Drehachse (165) angeordnet ist,
- das Koppelmittel (245) den Unterarm (140) mit der Stützstruktur (240) koppelt, und
- die Stützeinrichtung (235) ausgebildet ist, Torsionskräfte um eine Querachse des Kraftfahrzeugs (15) resultierend aus Windlasten auf den Stromabnehmer (80) durch die Bewegung des Kraftfahrzeugs (15) sowie Beschleunigungskräfte in Längsrichtung auf den Stromabnehmer (80) sowie Reibkräfte durch das Entlangreiben der Schleifleiste (205, 210) an der Fahrleitung (40, 45) abzustützen und im Wesentlichen das erste Drehgelenk (125) von einer Torsionsbelastung um diese Querachse freizustellen.

2. Kraftfahrzeug (15) nach Anspruch 1,
- wobei der Stromabnehmer (80) eine Wippenanordnung (200) und wenigstens eine Schleifleiste (205, 210) umfasst,
- wobei die Schleifleiste (205, 210) fahrleitungsseitig mit der Wippenanordnung (200) verbunden ist,
- wobei die Wippenanordnung (200) mittels eines dritten Drehgelenks (135) drehbar um eine dritte Drehachse (195) mit dem Oberarm (145) gekoppelt ist,
- wobei die dritte Drehachse (195) parallel zur Fahrzeuglängsachse (90) angeordnet ist.

3. Kraftfahrzeug (15) nach Anspruch 1 oder 2,
- wobei wenigstens eines der Drehgelenke (125, 130, 135) blockierbar ist
- und/oder wobei wenigstens eines der Drehgelenke (125, 130, 135) antreibbar ist.

4. Kraftfahrzeug (15) nach einem der vorhergehenden Ansprüche,
- wobei der Stromabnehmer (80) ein erstes Spannmittel (215) umfasst,
- wobei das erste Spannmittel (215) mit der Fahrzeugstruktur (85) und mit dem Unterarm (140) gekoppelt ist,
- wobei das erste Spannmittel (215) eine erste Kraft (F_{S1}) bereitstellt,
- wobei vorzugsweise die erste Kraft (F_{S1}) den Unterarm (140) gegenüber der Fahrzeugstruktur (85) verspannt.

5. Kraftfahrzeug (15) nach Anspruch 4,
- wobei das erste Spannmittel (215) eine erste Antriebseinrichtung (225) umfasst,
- wobei die erste Antriebseinrichtung (225) ausgebildet ist, schaltbar die erste Kraft (F_{S1}) bereitzustellen,
- wobei die erste Antriebseinrichtung (225) ausgebildet ist, eine Position des Unterarms (140) relativ zur Fahrzeugstruktur (85) zu verändern.

6. Kraftfahrzeug (15) nach einem der vorhergehenden Ansprüche,
- wobei das erste Drehgelenk (125) zu einer Fahrzeugmitte (160) der Fahrzeugstruktur (85) quer zur Fahrzeuglängsachse (90) versetzt angeordnet ist.

7. Kraftfahrzeug (15) nach einem der vorhergehenden Ansprüche,
- wobei die Stützstruktur (240) sich in einer Drehebene zur ersten Drehachse (165) erstreckt,
- und/oder die Stützstruktur (240) oberhalb des ersten Drehgelenks (125) angeordnet ist.

8. Kraftfahrzeug (15) nach einem der vorhergehenden Ansprüche,
- wobei das Koppelmittel (245) wenigstens ein Führungselement (2105, 315) umfasst,
- wobei das Führungselement (2105, 315) mit dem Unterarm (140) gekoppelt ist,
- wobei das Führungselement (2105, 315) und die Stützstruktur (240) in Wirkverbindung zueinander stehen und den Unterarm (140) in einer weiteren Drehebene um die erste Drehachse (165) führen.

9. Kraftfahrzeug (15) nach einem der vorhergehenden Ansprüche,
- wobei die Stützstruktur (240) eine erste Verzahnung (305) und das Führungselement (315) eine zweite Verzahnung (320) aufweisen,
- wobei die zweite Verzahnung (320) kämmend in die erste Verzahnung (305) eingreift,
- wobei das Führungselement (315) drehbar um eine weitere Drehachse (330) ist,
- wobei die weitere Drehachse (330) parallel zur Fahrzeuglängsachse (90) angeordnet ist.

10. Kraftfahrzeug (15) nach Anspruch 8 oder 9,
- wobei das Führungselement (315) drehmomentschlüssig mit einer Ausgangsseite der ersten Antriebseinrichtung (225) verbunden ist.

11. Kraftfahrzeug (15) nach einem der Ansprüche 8 bis 10,
- wobei das Koppelmittel (245) wenigstens ein weiteres Führungselement (250) aufweist,
- wobei das weitere Führungselement (250) mit dem Unterarm (140) gekoppelt ist,
- wobei die Stützstruktur (240) wenigstens eine erste Stützfläche (270, 285) und das weitere Führungselement (250) eine der ersten Stützfläche (270, 285) zugewandte zweite Stützfläche (275, 280) aufweist,
- wobei die erste Stützfläche (270, 285) und die zweite Stützfläche (275, 280) gegenüberliegend zueinander angeordnet sind,
- wobei die erste Stützfläche (270, 285) und die zweite Stützfläche (275, 280) jeweils in einer Ebene angeordnet sind,
- wobei die Ebenen geneigt zu der ersten Drehachse (165) angeordnet sind,
- wobei die erste Stützfläche (270, 285) und die zweite Stützfläche (275, 280) ausgebildet sind, bei Einleitung einer parallel zur ersten Drehachse (165) wirkenden Kraft in den Unterarm (140) die Kraft (F_{B}, F_{W}) durch einen Berührkontakt zwischen der ersten Stützfläche (270, 285) und der zweiten Stützfläche (275, 280) an der Stützstruktur (240) abzustützen.

12. Kraftfahrzeug (15) nach Anspruch 11,
- wobei die Stützstruktur (240) wenigstens eine Aufnahme (265) aufweist,
- wobei die Aufnahme (265) die erste Stützfläche (270) aufweist,
- wobei das weitere Führungselement (250) als Gleitstein ausgebildet ist,
- wobei das weitere Führungselement (250) in die Aufnahme (265) eingreift.

## Claims

1. Motor vehicle (15), in particular a commercial vehicle or a bus,
- having a current collector (8) for transferring electrical energy between a traction drive (75) of the motor vehicle (15) and a fixed-location electrical overhead line (40, 45), a vehicle structure (85) and a vehicle longitudinal axis (90), along which the motor vehicle (15) is configured to be moved,
- wherein the current collector (80) has a supporting rigging (120),
- wherein the supporting rigging (120) comprises at least an upper arm (145) and a lower arm (140),
- wherein the lower arm (140) is coupled to the vehicle structure (85) by means of a first pivot joint (125), such that it can rotate about a first axis of rotation (165),
- wherein the upper arm (145) is coupled to the lower arm (140) by means of a second pivot joint (130), such that it can rotate about a second axis of rotation (190),
- wherein the first axis of rotation (165) and/or the second axis of rotation (190) are oriented in parallel with the vehicle longitudinal axis (90) of the motor vehicle (15),
- wherein a second tensioning means (220) is provided,
wherein the second tensioning means (220) is coupled to the upper arm (145) and to the lower arm (140),
- wherein the second tensioning means (220) provides a second force (FS2),
- wherein the second force (FS2) distorts the upper arm (145) with respect to the lower arm (140),
- wherein the second tensioning means (220) comprises a second drive facility (230),
- wherein the second drive facility (230) is embodied to provide the second force (FS2) in a switchable manner,
- wherein the second drive facility (230) is embodied to alter a position of the upper arm (145) in relation to the lower arm (140),
- wherein the current collector (80) comprises a support facility (235),
- wherein the support facility (235) comprises a support structure (240) and a coupling means (245),
**characterised in that**
- the support structure (240) is connected to the vehicle structure (85) and is embodied such that it runs around the first axis of rotation (165) in an arcing manner, at least in sections,
- the support structure (240) is arranged in a rotation plane for the first axis of rotation (165),
- the coupling means (245) couples the lower arm (140) to the support structure (240), and
- the support facility (235) is embodied to brace torsion forces about a transverse axis of the motor vehicle (15) resulting from wind loads on the current collector (80) due to the movement of the motor vehicle (15) and acceleration forces in the longitudinal direction on the current collector (80), as well as friction forces due to the collector strip (205, 210) rubbing along the overhead line (40, 45) and to substantially release the first pivot joint (125) from a torsion load about this transverse axis.

2. Motor vehicle (15) according to claim 1,
- wherein the current collector (80) comprises a rocker arrangement (200) and at least one collector strip (205, 210),
- wherein the collector strip (205, 210) is connected to the rocker arrangement (200) on the overhead line side,
- wherein the rocker arrangement (200) is coupled to the upper arm (145) by means of a third pivot joint (135), such that it can rotate about a third axis of rotation (195),
- wherein the third axis of rotation (195) is arranged in parallel with the vehicle longitudinal axis (90).

3. Motor vehicle (15) according to claim 1 or 2,
- wherein at least one of the pivot joints (125, 130, 135) is able to be blocked
- and/or wherein at least one of the pivot joints (125, 130, 135) is able to be driven.

4. Motor vehicle (15) according to one of the preceding claims,
- wherein the current collector (80) comprises a first tensioning means (215),
- wherein the first tensioning means (215) is coupled to the vehicle structure (85) and to the lower arm (140),
- wherein the first tensioning means (215) provides a first force (F_{S1}),
- wherein preferably the first force (F_{S1}) distorts the lower arm (140) with respect to the vehicle structure (85).

5. Motor vehicle (15) according to claim 4,
- wherein the first tensioning means (215) comprises a first drive facility (225),
- wherein the first drive facility (225) is embodied to provide the first force (F_{S1}) in a switchable manner,
- wherein the first drive facility (225) is embodied to alter a position of the lower arm (140) in relation to the vehicle structure (85).

6. Motor vehicle (15) according to one of the preceding claims,
- wherein the first pivot joint (125) is arranged offset from a vehicle centre (160) of the vehicle structure (85), transversely to the vehicle longitudinal axis (90).

7. Motor vehicle (15) according to one of the preceding claims,
- wherein the support structure (240) extends in a rotation plane for the first axis of rotation (165)
- and/or the support structure (240) is arranged above the first pivot joint (125).

8. Motor vehicle (15) according to one of the preceding claims,
- wherein the coupling means (245) comprises at least one guide element (2105, 315),
- wherein the guide element (2105, 315) is coupled to the lower arm (140),
- wherein the guide element (2105, 315) and the support structure (240) have an active connection to one another and guide the lower arm (140) in a further rotation plane about the first axis of rotation (165).

9. Motor vehicle (15) according to one of the preceding claims,
- wherein the support structure (240) has a first toothing (305) and the guide element (315) has a second toothing (320),
- wherein the second toothing (320) engages into the first toothing (305) in a meshing manner,
- wherein the guide element (315) is able to be rotated about a further axis of rotation (330),
- wherein the further axis of rotation (330) is arranged in parallel with the vehicle longitudinal axis (90).

10. Motor vehicle (15) according to claim 8 or 9,
- wherein the guide element (315) is connected to an output side of the first drive facility (225) such that it conducts torque.

11. Motor vehicle (15) according to one of claims 8 to 10,
- wherein the coupling means (245) has at least one further guide element (250),
- wherein the further guide element (250) is coupled to the lower arm (140),
- wherein the support structure (240) has at least one first support area (270, 285) and the further guide element (250) has a second support area (275, 280) facing the first support area (270, 285),
- wherein the first support area (270, 285) and the second support area (275, 280) are arranged opposite one another,
- wherein the first support area (270, 285) and the second support area (275, 280) are arranged in one plane in each case,
- wherein the planes are arranged with an incline towards the first axis of rotation (165),
- wherein the first support area (270, 285) and the second support area (275, 280) are embodied, when a force acting in parallel with the first axis of rotation (165) is introduced into the lower arm (140), to brace the force (FB, FW) resulting from a touching contact between the first support area (270, 285) and the second support area (275, 280) against the support structure (240).

12. Motor vehicle (15) according to claim 11,
- wherein the support structure (240) has at least one recess (265),
- wherein the recess (265) has the first support area (270),
- wherein the further guide element (250) is embodied as a sliding block,
- wherein the further guide element (250) engages into the recess (265).

## Revendications

1. Véhicule (15) automobile, notamment véhicule utilitaire ou autobus,
- ayant un appareil (80) de prise de courant pour transmettre de l'énergie électrique entre une propulsion (75) de traction du véhicule (15) automobile et une caténaire (40, 45) électrique à poste fixe, une structure (85) de véhicule et un axe (90) longitudinal de véhicule, suivant lequel le véhicule (15) automobile est conçu pour être déplacé,
- dans lequel l'appareil (80) de prise de courant a une barre (120) porteuse,
- dans lequel la barre (120) porteuse comprend au moins un bras (145) supérieur et un bras (140) inférieur,
- dans lequel le bras (140) inférieur est, au moyen d'une première rotule (125), couplé à la structure (85) du véhicule, de manière à pouvoir tourner autour d'un premier axe (165) de rotation,
- dans lequel le bras (145) supérieur est, au moyen d'une deuxième rotule (130), couplé au bras (140) inférieur de manière à pouvoir tourner autour d'un deuxième axe (190) de rotation,
- dans lequel le premier axe (165) de rotation et/ou le deuxième axe (190) de rotation sont dirigés parallèlement à l'axe (90) longitudinal du véhicule (15) automobile,
- dans lequel il est prévu un deuxième moyen (220) de blocage, le deuxième moyen (220) de blocage étant couplé au bras (145) supérieur et au bras (140) inférieur,
- dans lequel le deuxième moyen (220) de blocage procure une deuxième force (FS2),
- dans lequel la deuxième force (FS2) bloque le bras (145) supérieur par rapport au bras (140) inférieur,
- dans lequel le deuxième moyen (220) de blocage comprend un deuxième dispositif (230) d'entraînement,
- dans lequel le deuxième dispositif (230) d'entraînement est constitué pour procurer, de manière commutable, la deuxième force (FS2),
- dans lequel le deuxième dispositif (230) d'entraînement est constitué pour modifier une position du bras (145) supérieur par rapport au bras (140) inférieur,
- dans lequel l'appareil (80) de prise de courant comprend un dispositif (235) d'appui,
- dans lequel le dispositif (235) d'appui comprend une structure (240) d'appui et un moyen (245) de couplage,
**caractérisé en ce que**
- la structure (240) d'appui est reliée à la structure (85) du véhicule et est constituée, au moins par endroit, en s'étendant en forme d'arc autour du premier axe (165) de rotation,
- la structure (240) d'appui est disposée dans un plan de rotation par rapport au premier axe (165) de rotation,
- le moyen (245) de couplage couple le bras (140) inférieur à la structure (240) d'appui, et
- dans lequel le dispositif (235) d'appui est constitué pour appuyer des forces de torsion autour d'un axe transversal du véhicule (15) provenant de charges de vent sur l'appareil (80) de prise de courant par le déplacement du véhicule (15) automobile, ainsi que des forces d'accélération dans la direction longitudinale sur l'appareil (80) de prise de courant, ainsi que des forces de frottement par le frottement du frotteur (205, 210) sur la caténaire (40, 45) et libérer sensiblement la première rotule (125) d'une charge de torsion autour de cet axe transversal.

2. Véhicule (15) suivant la revendication 1,
- dans lequel l'appareil (80) de prise de courant comprend un agencement (200) d'archet et au moins un frotteur (205, 210),
- dans lequel le frotteur (205, 210) est relié, du côté de la caténaire, à l'agencement (200) d'archet,
- dans lequel l'agencement (200) d'archet est couplé à l'arbre (145) supérieur, au moyen d'une troisième rotule (135), de manière à pouvoir tourner autour d'un troisième axe (195) de rotation,
- dan lequel le troisième axe (195) de rotation est parallèle à l'axe (90) longitudinal du véhicule.

3. Véhicule (15) suivant la revendication 1 ou 2,
- dans lequel au moins l'une des rotules (125, 130, 135) peut être bloquée
- et/ou au moins l'une des rotules (125, 130, 135) peut être entraînée.

4. Véhicule (15) suivant l'une des revendications précédentes,
- dans lequel l'appareil (80) de prise de courant comprend un premier moyen (215) de blocage,
- dans lequel le premier moyen (215) de blocage est couplé à la structure (85) du véhicule et au bras (140) inférieur,
- dans lequel le premier moyen (215) de blocage procure une première force (F_{S1}),
- dans lequel, de préférence, la première force (F_{S1}) bloque le bras (140) inférieur par rapport à la structure (85) du véhicule.

5. Véhicule (15) suivant la revendication 4,
- dans lequel le premier moyen (215) de blocage comprend un premier dispositif (225) d'entraînement,
- dans lequel le premier dispositif (225) d'entraînement est constitué pour procurer la première force (F_{S1}), de manière commutable,
- dans lequel le premier dispositif (225) d'entraînement est constitué pour modifier une position du bras (140) inférieur par rapport à la structure (85) du véhicule.

6. Véhicule (15) suivant l'une des revendications précédentes,
- dans lequel la première rotule (125) est disposée décalée transversalement à l'axe longitudinal du véhicule par rapport à un milieu (160) de véhicule de la structure (85) du véhicule.

7. Véhicule (15) suivant l'une des revendications précédentes,
- dans lequel la structure (240) d'appui s'étend dans un plan de rotation par rapport au premier axe (165) de rotation,
- et/ou la structure (240) d'appui est disposée au dessus de la première rotule (125).

8. Véhicule (15) suivant l'une des revendications précédentes,
- dans lequel le moyen (245) de couplage comprend au moins un élément (2105, 315) de guidage,
- dans lequel l'élément (2105, 315) de guidage est couplé au bras (140) inférieur,
- dans lequel l'élément (2105, 315) de guidage et la structure (240) d'appui sont en liaison d'action l'un avec l'autre et guident le bras (140) inférieur dans un autre plan de rotation autour du premier axe (165) de rotation.

9. Véhicule (15) suivant l'une des revendications précédentes,
- dans lequel la structure (240) d'appui a une première denture (305) et l'élément (315) de guidage a une deuxième denture (320),
- dans lequel la deuxième denture (320) engrène dans la première denture (305),
- dans lequel l'élément (315) de guidage peut tourner autour d'un autre axe (330) de rotation,
- dans lequel l'autre axe (330) de rotation est parallèle à l'axe (90) longitudinal du véhicule.

10. Véhicule (15) suivant la revendication 8 ou 9,
- dans lequel l'élément (315) de guidage est relié en couple de rotation à un côté de sortie du premier dispositif (225) d'entraînement.

11. Véhicule (15) suivant l'une des revendications 8 à 10,
- dans lequel le moyen (245) de couplage a au moins un autre élément (250) de guidage,
- dans lequel l'autre élément (250) de guidage est couplé au bras (140) inférieur,
- dans lequel la structure (240) d'appui a au moins une première surface (270, 285) d'appui et l'autre élément (250) de guidage a une deuxième surface (275, 280) d'appui tournée vers la première surface (270, 275) d'appui,
- dans lequel la première surface (270, 285) d'appui et la deuxième surface (275, 280) d'appui sont disposées en face l'une de l'autre,
- dans lequel la première surface (270, 285) d'appui et la deuxième surface (275, 280) d'appui sont disposées chacune dans un plan,
- dans lequel les plans sont inclinés par rapport au premier axe (165) de rotation,
- dans lequel la première surface (270, 285) d'appui et la deuxième surface (275, 280) d'appui sont constituées pour, lors de l'application au bras (140) inférieur d'une force agissant parallèlement au premier axe (165) de rotation, appuyer la force (F_{B}, F_{W}) par un contact de toucher entre la première surface (270, 285) d'appui et la deuxième surface (275, 280) d'appui sur la structure (240) d'appui.

12. Véhicule (15) suivant la revendication 11,
- dans lequel la structure (240) d'appui a au moins un logement (265),
- dans lequel le logement (265) a la première surface (270) d'appui,
- dans lequel l'autre élément (250) de guidage est constitué sous la forme d'un patin,
- dans lequel l'autre élément (250) de guidage pénètre dans le logement (265).
